# EUROPEAN PATENT APPLICATION

(11) **EP 2 725 838 A1**
(43) Date of publication of application: **30.04.2014**
(21) Application number: 12306333.1
(22) Date of filing: 26.10.2012
(51) Int. Cl.: H04W 16/30

(54) **A meta-cell for a cellular communication network and a method for upgrading a macro-cell into a meta-cell**

(71) Applicant: Alcatel Lucent, 75007 Paris (FR)
(72) Inventor: Housni, Jamal, 91620 NOZAY (FR); Helmers, Hakon, 91620 NOZAY (FR)
(74) Representative: 2SPL Patentanwälte

(57) **Abstract**

A meta-cell (1) for a cellular communication network comprising:
- a macro-cell (2) disposed at a center (3),
- a first plurality of directional small-cells (9a-9f), disposed generally equiangularly along a first circle (5) centered at said center (3) and strictly included into a maximum range (4) of said macro-cell (2), each small-cell (9a-9f) being oriented outside said first circle (5).

A method for upgrading a macro-cell (2) into a meta-cell (1).

## Description

### TECHNICAL FIELD

The technical field is the one of cellular communication network and more particularly of the deployment of cells in such a cellular communication network to cover a geographical area.

### BACKGROUND

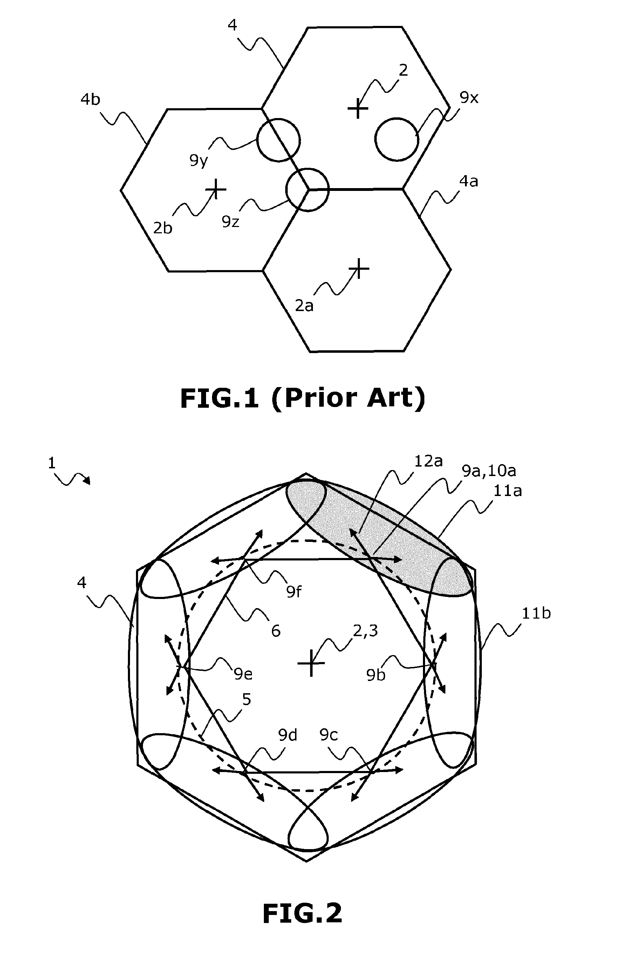

As schematically illustrated by figure 1, showing a plan view of a geographical area, a cellular communication network comprised at least one cell 2. A cell 2 is a radio device in charge of bi-directionally wirelessly dialoging with mobile terminals present in its radio range 4 and to connect these mobile terminals with the cellular core network. In order to cover a geographical area several cells 2, 2a, 2b are used. Said cells 2, 2a, 2b are relatively disposed so that their respective ranges 4, 4a, 4b collaborate so as to pave said geographical area.

Cellular communication network have been initially deployed using a first type of cell 2, 2a, 2b, emitting high radio power level and dedicated to large area coverage. These legacy cells 2, 2a, 2b are called macro-cells, generically referred by 2.

A second type of cell 9x, 9y, 9z has been introduced later. Said second type of cell 9x, 9y, 9z uses lower radio power level and are intended to provide capacity increase in limited areas under macro-cell 2 umbrella. These cells 9x, 9y, 9z are called small-cells, generically referred by 9.

Said small-cells 9 are used to cover several other needs. A small-cell 9, as illustrated by small-cell 9x, can be located inside the range 4 of a macro-cell 2 in order to locally increase the capacity, or to remedy a locally blind area. A small cell 9 can also be located near the border of the range 4 of a macro-cell 2, where the radio communication link with the macro-cell 2 becomes weak. This is illustrated by small-cell 9y located at the border of the range 4 of macro-cell 2 and also at the border of the range 4b of macro-cell 2b, and by small-cell 9z located at the triple border shared between macro-cells 2, 2a and 2b.

Small-cells 9 are becoming more and more numerous, as they appear to be a convenient way of improving the capacity of a cellular network.

One important fact to note is that the vendor of the small-cell 9 is generally not the same as the vendor of the macro-cell 2. This leads to problems when it comes to communicate between cells 2, 9. Communication would be advantageous at least when managing handover of a mobile terminal which moves between two cells 2, 9 and when managing interferences using a cooperating scheme between neighboring cells 2, 9.

Since legacy macro-cells 2 already operate on the full available spectrum, small-cells 9 have to operate at the same frequency bands. This obviously leads to radio interferences, both on downlink: from cell to mobile terminal and on uplink: from mobile terminal to cell.

A deployment/upgrading paradigm would then be useful to solve these problems with a communication/interaction between small-cells 9 and legacy macro-cells 2 as reduced as possible.

### SUMMARY

An embodiment concerns a meta-cell for a cellular communication network comprising: a macro-cell disposed at a center, a first plurality of directional small-cells, disposed generally equiangularly along a first circle centered at said center and strictly included into a maximum range of said macro-cell, each small-cell being oriented outside said first circle.

According to another feature, the range of each small-cell remains generally contained in said maximum range of said macro-cell.

According to another feature, said meta-cell further comprises: at least one second plurality of directional small-cells, disposed generally equiangularly along a second circle centered at said center and strictly included into said first circle, each small-cell being oriented outside said second circle.

According to another feature, a small-cell of the second plurality is angularly disposed between two small-cells of the first plurality.

According to another feature, the effective range of said macro-cell is reduced to cover the smallest of the circles.

According to another feature, said meta-cell further comprises a gateway able to manage all the small-cells of the meta-cell.

According to another feature, said gateway is further networked with at least corresponding gateways of neighboring meta-cells.

An embodiment concerns a method for upgrading a macro-cell into such a meta-cell.

The present disclosure is mainly intended for broadband networks, such as 3G or LTE, and their combinations.

### BRIEF DESCRIPTION OF THE DRAWINGS

Others features, details and advantages of the invention will become more apparent from the detailed illustrating description given hereafter with respect to the drawings on which:
- Figure 1, already described, schematically illustrates, in map view, a typical geographical area and its coverage by macro-cells and small cells according to the prior art,
- Figure 2 schematically illustrates, in map view, a possible embodiment of a meta-cell,
- Figure 3 schematically illustrates, in map view, another possible embodiment of a meta-cell,
- Figure 4 schematically illustrates a possible embodiment of a networking combining macro-cell and small cells,
- Figure 5 schematically illustrates another possible embodiment of a networking combining macro-cell and small cells.

### DETAILED DESCRIPTION

One idea of the present disclosure is a meta-cell 1. Such a meta-cell 1 comprises a macro-cell 2 and a first plurality of small-cells 9. Such a meta-cell 1 is intended to replace a macro-cell 2 preexisting in a cellular communication network, in order to upgrade said macro-cell 2 by adding said plurality of small-cells 9 to it.

As illustrated in figure 2, said preexisting macro-cell 2 is disposed at a location point 3 being the center 3 of its range 4. Macro-cell 2 is typically omnidirectional. Said range 4 is a currently used range 4, that is generally the maximum possible range 4 of said macro-cell 2.

Said macro-cell 2 is completed by a first plurality of small-cells 9a-9f. Said small-cells 9a-9f are disposed along a first circle 5. Said first circle 5 is centered at said center 3 and is strictly included into the range 4 of the macro-cell 2. Otherwise said, the first radius of said first circle 5 is strictly lesser than a mean radius of said range 4. A generally discoid area is then formed between said range 4 and said first circle 5. An inner central area is formed by said first circle 5.

In order to provide coverage over said discoid area, small-cells 9a-9f of said first plurality are disposed along said first circle 5 and are advantageously oriented outside said first circle 5.

Advantageously, in order to reduce to the minimum any possible interference between a small-cell 9a-9f and the macro-cell 2, said outside orientation is combined with said small-cells 9a-9f being directional. The expression directional is to be understood here as opposed to omnidirectional. This means that the antenna or set of antennas 12a of a small-cell 9a, that defines the range 11a of a small-cell 9a, comprises at least one principal direction, and that said direction is pointing toward the outside of said first circle 5.

According to a preferred embodiment, the range 11a of a small-cell 9a is mainly disposed on one side of a radio center 10a of a small-cell 9a and said radio center 10a is disposed generally over said first circle 5.

Advantageously, said small-cells 9a-9f are disposed equiangularly around said first circle 5.

Advantageously, in order to reduce to the minimum any possible interference between a small-cell 9a-9f pertaining to a first meta- cell 1, and a small-cell pertaining to a neighbor meta-cell, the range 11a-11b of each small-cell 9a-9f is design so that it remains generally contained in the initial maximum range 4 of the macro-cell 2. Such feature is advantageous in that it permits the replacement of a macro-cell 2 by a meta-cell 1, one by one. This feature advantageously provides a flexible manner to complete an upgrade of a macro-cell network.

According to another advantageous feature, when a second meta-cell is deployed, upgrading an old macro-cell, which is neighbor to an already upgraded first meta-cell 1, the small-cells pertaining to said second meta-cell are advantageously angularly disposed in order to decrease any potential interference with the small-cells 9a-9f of said first meta-cell 1.

The number of small-cells 9a-9f in said first plurality can be any number. Said number depends upon the form of the range 11a, 11b individually covered by each small-cell 9a-9f. Said number of small-cells 9a-9f is thus a tradeoff between a least number of small-cells 9a-9f and a good average coverage, if a minimum coverage is aimed. Said number may be raised at will in order to increase the capacity.

The indicative radius of a maximum range 4 of macro-cell 2 is about 500 m. The discoid area may present an indicative width of 150 m. The inner central area/first circle 5 may thus present an indicative radius of 350 m.

According to another feature of a meta-cell 1, since said discoid area is generally wholly covered by the first plurality of small-cells 9a-9f, the range of the macro-cell 2 can advantageously be reduced, so as to become a first reduced range 6 generally covering said first circle 5/inner central area.

This may be done by tuning the radio power of the macro-cell 2. Such a tuning is typically provided as an external command provided by the macro-cell 2. In one embodiment, this is the only action involving the macro-cell 2 during the deployment of the meta-cell 1.

Such a meta-cell 1 deployment scheme is advantageous in that it reduces interferences. Due to their orientation, each small-cell 9a-9f backs the macro-cell 2. By doing so, the interferences between said small-cell and the macro-cell 2 are reduced. This is especially true when the maximum range 4 of the macro-cell 2 is reduced to its reduced range 6.

A reduction of maximum ranges 4 of the macro-cells 2 to reduced ranges 6, allows for a drastic reduction or a total suppression of interferences between two neighbor macro-cells 2.

Instead, interferences between two neighbor macro-cells 2 are replaced by interferences between a small-cell 9 pertaining to a meta-cell 1 and a corresponding neighbor small-cell 9 pertaining to a neighbor meta-cell 1.

Such interferences are very reduced by design, as previously described, first by the form of the ranges 11a-11b of each small-cell 9a-9f, designed to remain included in the former range 4 of the macro-cell 2, and second by angularly interspacing small-cells of two neighbor meta-cells.

However, if such interferences are nonetheless present, they appear to be far less damageable since they can be managed e.g. by a cooperating scheme. Such a cooperating scheme most often needs a signaling communication between interfering small-cells 9. Such a signaling communication is easier to obtain, since both interfering small-cells 9 are provided by the same vendor, and are, as will be described later, advantageously networked together.

When it comes to handover management, such a meta-cell 1 deployment scheme also appears to be advantageous. A mobile terminal moving across a meta-cell 1 will necessitate either a handover between a macro-cell 2 and one of its associated small-cell 9a-9f, or a handover between two small-cells 9.

When the ranges 4 of macro-cells 2 are reduced to reduced ranges 6, a handover between two macro-cells 2 no longer exists.

In order to manage at least interferences and/or handover between said small-cells 9, a meta-cell 1 advantageously comprises a gateway 13. Such a gateway 13 is a network device able to manage at least all the small-cells 9a-9f, 9g-9l of at least one meta-cell 1.

A gateway 13 covers for its managed small-cells 9, at least the following functions: identification, inter small-cells handover management, inter small-cells interferences management. Moreover, a gateway 13 interfaces said managed small-cells 9 with the cellular network, and presents the group of managed small-cells 9 as a single macro-cell.

Depending on the load of such a gateway 13 and on architecture choices, a gateway 13 can be designed to manage all the small-cells 9 of several, advantageously neighbor, meta-cells 1.

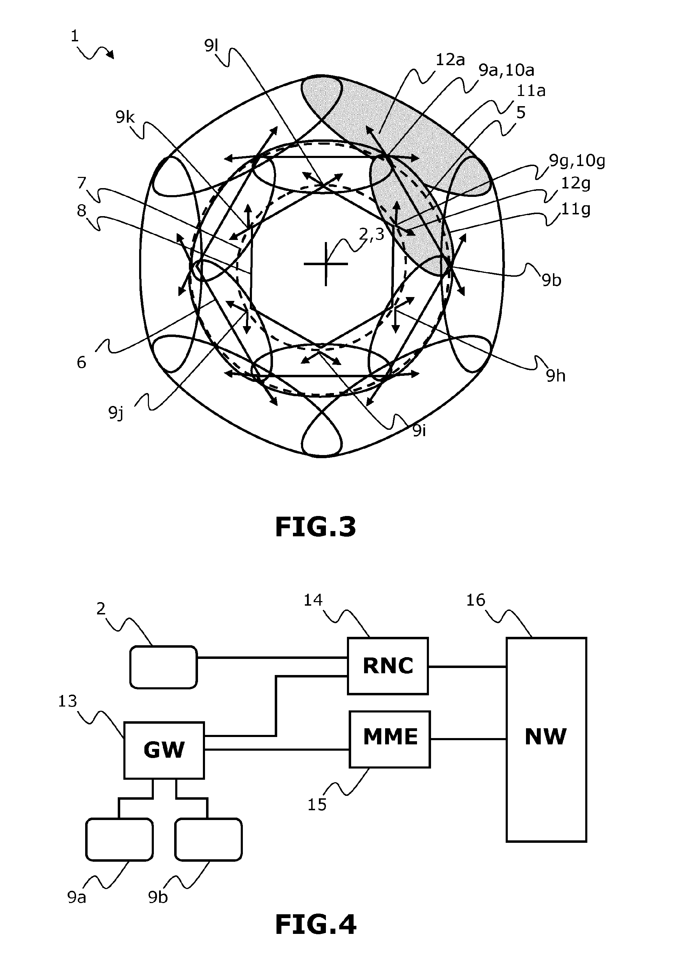

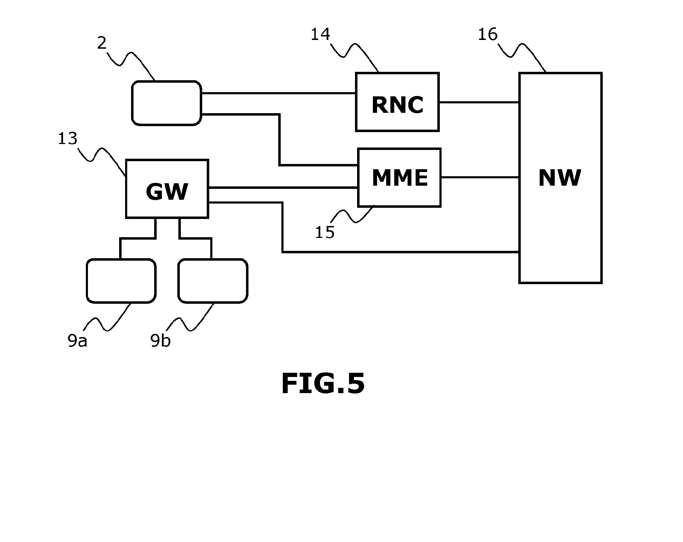

To manage at least interferences and/or handover, as figured in two possible networking architectures respectively illustrated in figures 4 and 5, a gateway 13 is connected to each of said small-cells 9, here represented/figured by the two small-cells 9a, 9b and provides signaling communications between them and with the remaining cellular network.

Said gateway 13 may advantageously further be networked with at least corresponding gateways of neighboring meta-cells.

In the case of a handover/interference managing between a macro-cell 2 and one of its associated small-cell 9a-9f, it will be managed by a network device linked with both the macro-cell 2 and the small-cell 9, called Radio Network Controller or RNC device 14, in the UTMS/LTE terminology. Such a RNC 14 device already exists in a macro-cell cellular network and is in charge, among others, of managing handover between macro-cells 2.

In the case of a handover/interference managing between two small-cells 9, two cases may occur. Either the two small-cells 9 pertains to the same meta-cell 1, or the two small-cells pertains to two different (but neighbor) meta-cells 1. In both cases, it may not be the same device in charge of managing the handover/interference. However in both cases, the device managing the handover/interference is provided by the vendor providing the two small-cells 9. Thus the handover/interference signaling is easier to realize and to apply.

Two possible networking architectures are respectively illustrated in figures 4 and 5. Said both figures comprise one illustrative macro-cell 2 and two small-cells 9a, 9b.

In both figures 4 and 5, a macro-cell 2 is interfaced to the core network 16 through a Radio Network Controller, RNC, 14. Said RNC 14 is a legacy network device in charge of managing the radio resources between macro-cells 2. As a legacy network device, it is preferable not to modify said RNC 14 device.

In both figures 4 and 5 small-cells 9a, 9b are gathered by a gateway 13 which interfaces them with the cellular network. Said interface is done through a Mobility Management Entity, MME, 15. Said MME 15 is a new network device, added with the introduction of small-cells 9. Said MME 15 is in charge of authentication and security, mobility management and managing subscriber profiles and service connectivity, mainly for said small-cells 9 which it interfaces with the core network 16.

According to a first possible architecture illustrated in figure 4, in addition of the aforementioned connections, a gateway 13 is also linked to an RNC 14 in order to manage radio resources and to interface with the core network 16.

According to a second possible architecture illustrated in figure 5, in addition of the aforementioned connections, a gateway 13 further incorporates a RNC like part and does no longer need to be linked to an RNC 14 in order to manage radio resources. Instead such a gateway 13, RNC capable, can directly interface the core network 16. In such a case a network device must be able to manage handover/interference signaling between a small-cell 9a, 9b through its gateway 13 and a macro-cell 2. Such a common network device may e.g. be an MME 15. In such architecture, the macro-cell 2 is then additionally linked to MME 15.

In both architectures, the set of small-cells 9 gathered and managed by a given gateway 13 are advantageously seen, as a whole, by the core network 16, as if they were a macro-cell.

With reference to figure 2, it has been described how a macro-cell 2 can be upgraded by adding a first belt of small-cells 9a-9f around a first circle 5. This upgrade, in addition to the previously mentioned advantages in terms of interference/handover management, also allows for a capacity increase, at least in said discoid area covered by small-cells 9a-9f, each of said small-cells 9a-9f offering an increased capacity, at least in terms of bandwidth and of number of manageable mobile terminals.

With reference to figure 3, once a macro-cell 2 has been upgraded by said first plurality of small-cells 9a-9f, the upgrading process can recursively be applied again toward the center 3 of the meta-cell 1. The upgrading process may further add a second plurality of small-cells 9g-9l. As for the first plurality, said small-cells 9g-9l are disposed along a circle. Said second circle 7 is centered at said center 3 and is strictly included into the first circle 5. Otherwise said, the second radius of said second circle 7 is strictly lesser than the first radius of said first circle 5. A new included generally discoid area is then formed between said first circle 5 and said second circle 7. An new inner central area is formed by said second circle 7.

In order to provide coverage over said new discoid area, small-cells 9g-9l of said second plurality are disposed along said second circle 7 and are oriented outside said first circle 7.

Advantageously, in order to reduce to the minimum any possible interference between a small-cell 9g-9l and the macro-cell 2, said outside orientation is combined with said small-cells 9g-9l being directional, as described before for the first plurality. This means that the antenna or set of antennas 12g of a small-cell 9g, that defines the range 11g of a small-cell 9g, comprises at least one principal direction, and that said direction is pointing toward the outside of said second circle 7.

According to a preferred embodiment, the range 11g of a small-cell 9g is mainly disposed on one side of a radio center 10g of a small-cell 9g and said radio center 10g is disposed generally over said second circle 7.

In addition, the ranges 11g of small-cells 9g-9l of the second plurality are designed to not overlap too much over the corresponding ranges 11a of the small-cells 9a-9f of the first plurality.

Advantageously, as for the small-cells 9a-9f of the first plurality, small-cells 9g-9l of the second plurality are disposed equiangularly around said second circle 7.

The number of small-cells 9g-9l in said second plurality can be any number. Said number depends upon the form of the range 11g individually covered by each small-cell 9g-9l. Said number of small-cells 9g-9l is thus a tradeoff between a least number of small-cells 9g-9l and a good average coverage, if a minimum coverage is aimed. Said number may be raised at will in order to increase the capacity. Said number is not necessarily the same as the number of small-cells 9a-9f of the first plurality.

If possible, depending on the respective numbers of small-cells in the first and second plurality, a small-cell 9g-9l of the second plurality is advantageously angularly disposed between two small-cells 9a-9e of the first plurality.

According to another feature of a meta-cell 1, since both said discoid areas are generally wholly covered by both the first plurality of small-cells 9a-9f, and the second plurality of small-cells 9g-9l, the range of the macro-cell 2 can advantageously be reduced, so as to become a second reduced range 8 generally covering said second circle 7/new inner central area.

Advantageously, the upgrading process can be further applied with a new inner plurality/belt of small-cells 9 disposed along a new inner circle. This process may then be applied, at least one plurality/circle at a time, depending on the capacity needs or on the money available. This feature advantageously provides a flexible manner to complete the upgrading.

Each addition of a new plurality/circle may be accompanied by a corresponding reduction of the range of the macro-cell 2 to accommodate said last smallest inner circle.

The process may even be end up by the replacement of the central macro-cell 2 by a single central small-cell 9.

Each new so added small-cell 9 may also be connected to the gateway 13 in order to be managed by it. By doing so a gateway 13 attached to a meta-cell 1 is able to commonly and locally managed at least all the small-cells 9a-9f, 9g-9l of all the successive pluralities, including said eventual single central small-cell.

It can be noticed that the interferences incurred by a small-cell 9, even a small-cell 9a disposed in the first external plurality of a meta-cell 1, are far less than the interferences incurred by an edge small-cell 9y, 9z of a prior art deployment.

Another advantage provided by neighbor small-cells 9 managed by a same shared gateway 13, is to offer high speed handover with a reduced latency due to the fact that said management is local.

## Claims

1. A meta-cell (1) for a cellular communication network comprising:
- a macro-cell (2) disposed at a center (3),
- a first plurality of directional small-cells (9a-9f), disposed generally equiangularly along a first circle (5) centered at said center (3) and strictly included into a maximum range (4) of said macro-cell (2), each small-cell (9a-9f) being oriented outside said first circle (5).

2. The meta-cell of claim 1, wherein the range (11a-11b) of each small-cell (9a-9f) remains generally contained in said maximum range (4) of said macro-cell (2).

3. The meta-cell of any one of claims 1 or 2, further comprising:
- at least one second plurality of directional small-cells (9g-9l), disposed generally equiangularly along a second circle (7) centered at said center (3) and strictly included into said first circle (5), each small-cell (9g-9l) being oriented outside said second circle (7).

4. The meta-cell of any one of claims 1 to 3, wherein a small-cell (9g-9l) of the second plurality is angularly disposed between two small-cells (9a-9e) of the first plurality.

5. The meta-cell of any one of claims 1 to 4, wherein the effective range (6, 8) of said macro-cell (2) is reduced to cover the smallest of the circles (5, 7).

6. The meta-cell of any one of claims 1 to 5, further comprising a gateway (13) able to manage all the small-cells (9a-9f, 9g-9l) of the meta-cell (1).

7. The meta-cell of claim 6, wherein said gateway (13) is further networked with at least corresponding gateways of neighboring meta-cells.

8. A method for upgrading a macro-cell (2) into a meta-cell (1) in a cellular communication network, comprising the step of: disposing around said macro-cell (2) disposed at a center (3), a first plurality of directional small-cells (9a-9f), generally equiangularly along a first circle (5) centered at said center (3) and strictly included into a maximum range (4) of said macro-cell (2), each small-cell (9a-9f) being oriented outside said first circle (5).

9. The method of claim 8, further comprising the step of: disposing at least one second plurality of directional small-cells (9g-9l), generally equiangularly along a second circle (7) centered at said center (3) and strictly included into said first circle (5), each small-cell (9g-9l) being oriented outside said second circle (7).

10. The method of any one of claims 8 or 9, wherein a small-cell (9g-9l) of the second plurality is angularly disposed between two small-cells (9a-9f) of the first plurality.

11. The method of any one of claims 8 to 10, further comprising the step of: reducing the effective range (6, 8) of said macro-cell (2) to cover the smallest of the circles (5, 7).

12. The method of any one of claims 8 to 11, further comprising the step of: enabling a gateway (13) to manage all the small-cells (9a-9e, 9g-9l) of the meta-cell (1).

13. The method of claim 12, further comprising the step of:
networking said gateway (13) with at least corresponding gateways of neighboring meta-cells.

## Amended claims

### Amended claims in accordance with Rule 137(2) EPC.

**1.** A meta-cell (1) for a cellular communication network comprising:
- a macro-cell (2) disposed at a center (3) and adapted to cover an area up to a maximum range (4);
- a first plurality of directional small-cells (9a-9f), disposed equiangularly along a first circle (5) centered at said center (3), said first circle being strictly included into said maximum range (4) of said macro-cell (2), each small-cell (9a-9f) being oriented outside said first circle (5), wherein the range (11a-11b) of each small-cell (9a-9f) remains generally contained in said maximum range (4) of said macro-cell (2),
**characterized in that** the effective range (6) of said macro-cell (2) is reduced to cover only an area corresponding to the first circle (5), and **in that** said meta-cell (1) further comprises:
- A gateway (13) for interfacing said first plurality of directional small-cells with said cellular communication network, and for managing inter small-cells handovers;
- Means (14, 15) connected to said gateway (13) for managing a handover between said macro-cell (1) and one of said directional small-cells.

**2.** The meta-cell of claim 1, further comprising:
- at least one second plurality of directional small-cells (9g-9l), disposed equiangularly along a second circle (7) centered at said center (3), said second circle being strictly included into said first circle (5), each small-cell (9g-9l) of said at least one second plurality of directional small-cells being oriented outside said second circle (7).

**3.** The meta-cell of any one of claim 2, wherein a small-cell (9g-9l) of the second plurality is angularly disposed between two small-cells (9a-9e) of the first plurality.

**4.** The meta-cell of any one of claims 2 to 3, wherein the effective range (8) of said macro-cell (2) is reduced to cover only an area corresponding to the second circle (7).

**5.** The meta-cell of any one of claims 1 to 4, wherein said gateway (13) is further networked with at least corresponding gateways of neighboring meta-cells.

**6.** The meta-cell of any one of claims 1 to 4, wherein said gateway (13) is further adapted to manage all the small-cells of several neighboring meta-cells.

**7.** A method for upgrading a macro-cell (2) into a meta-cell (1) in a cellular communication network, said macro-cell (2) being disposed at a center (3) and adapted to cover an area up to a maximum range (4), comprising the steps of:
disposing around said macro-cell (2) a first plurality of directional small-cells (9a-9f), equiangularly along a first circle (5) centered at said center (3), said first circle being strictly included into said maximum range (4), each small-cell (9a-9f) being oriented outside said first circle (5), wherein the range (11a-11b) of each small-cell (9a-9f) remains generally contained in said maximum range (4) of said macro-cell (2),
reducing the effective range (6) of said macro-cell (2) to cover only an area corresponding to the first circle;
providing a gateway (13) adapted to interface said first plurality of directional small-cells with said cellular communication network, and to manage inter small-cells handovers
providing means (14, 15) connected to said gateway (13) for managing a handover between said macro-cell (1) and one of said directional small-cells.

**8.** The method of claim 7, further comprising the step of: disposing at least one second plurality of directional small-cells (9g-9l), equiangularly along a second circle (7) centered at said center (3), said second circle being strictly included into said first circle (5), each small-cell (9g-9l) being oriented outside said second circle (7).

**9.** The method of any one of claims 7 or 8, wherein a small-cell (9g-9l) of the second plurality is angularly disposed between two small-cells (9a-9f) of the first plurality.

**10.** The method of any one of claims 8 to 9, further comprising the step of: reducing the effective range (6, 8) of said macro-cell (2) to cover the second circle (7).

**12.** The method of any one of claims 7 to 10, further comprising the step of: enabling said gateway (13) to manage all the small-cells (9a-9e, 9g-9l) of the meta-cell (1).

**13.** The method of any one of claims 7 to 10, further comprising the step of: networking said gateway (13) with at least corresponding gateways of neighboring meta-cells.
